# EUROPEAN PATENT APPLICATION

(11) **EP 4 502 637 A1**
(43) Date of publication of application: **05.02.2025**
(21) Application number: 23189388.4
(22) Date of filing: 03.08.2023
(51) Int. Cl.: G01S 1/04, G01S 5/02, G01S 7/00, G01S 13/86, H04W 64/00

(54) **A METHOD FOR CALCULATING A POSITION**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

The invention relates to a method (100) for calculating a position of a user equipment (10), comprising the following steps performed by the user equipment (10):
- Transmitting (101) a sidelink positioning reference signal (5) to a target (20),
- Receiving (102) a reflection of the transmitted sidelink positioning reference signal (7) from the target (20),
- Combining (103) a sensing information and a positioning information, wherein the sensing information is based on information regarding the reflection of the transmitted sidelink positioning reference signal (7), and wherein the positioning information is based on ranging information regarding the transmitted positioning reference signal (5),
- Calculating (104) a position of the user equipment (10) based on the combined sensing and positioning information.

## Description

The invention relates to a method for calculating a position. Furthermore, the invention relates to a user equipment for the same purpose. Moreover, the invention relates to a corresponding computer program and a computer-readable medium.

### State of the art

Radio sensing has become increasingly important, as the demand for smartness of devices is drastically increasing. Unlike conventional sensing, radio sensing uses existing radio signals or devices to passively sense the ambient environment for low cost and wide deployment. Cellular networks such as 5G radio networks provide usage of a high frequency, large bandwidth, or antenna array, making them usable for radio sensing. Signals transmitted by a radio device and received by another object or device contain variations caused by other objects in the ambient environment between the transmitter and the receiver. Hence, measurements of these signals can be used to sense the environment.

In radio-based positioning in a cellular network, a device can locate itself and can be located by using sent and received radio-waves. Radio-based positioning in a cellular network, particularly a 5G network, leverages radio signal characteristics to determine the location of a device. The object can be a building or a device capable of receiving a radio signal, such as a smartphone, drone, or vehicle. The applying of positioning can be realized by using different methods such as Time of Arrival (ToA), Time Difference of Arrival (TDoA), or Angle of Arrival (AoA) to calculate the object's position. These methods rely on measuring the time a signal takes to travel from the transmitter to the receiver (object), or the angle at which the signals reach the receiver. Given the high frequency and large bandwidth of 5G signals, they provide a higher resolution for positioning, making positioning more accurate than it was with previous generations of cellular networks. Further, in cellular networks devices with reduced capabilities are operated. Currently, these devices with reduced capabilities, so called RedCap UEs, are only able to transmit or receive data with a limited bandwidth. However, positioning reference signals are transmitted with a high bandwidth. Therefore, the reduced capability device is disadvantageously not capable of efficiently supporting a sensing and/or positioning due to the limited bandwidth.

### Disclosure of the invention

It is therefore an object of the present invention to at least partially overcome the disadvantages described above. In particular, it is an object of the present invention, to provide a method for a user equipment to improve a positioning by combining information based on sensing and positioning in a cellular network.

The above object is solved by a method with the features of claim 1 and a user equipment with the features of claim 7. Further features and details of the invention are disclosed in the respective dependent claims, the description, and the drawings. Features and details described in connection with the inventive method also apply to the inventive user equipment as well as the inventive reduced capability user equipment, and vice versa in each case, so that with respect to the disclosure concerning the individual aspects of the invention reference can always be made mutually.

The object is particularly solved by a method for calculating a position for a user equipment performed at the user equipment. The method according to a first aspect of the invention comprises the following steps performed by a user equipment:
- Transmitting a sidelink positioning reference signal to a target,
- Receiving a reflection of the transmitted sidelink positioning reference signal from the target,
- Combining a sensing information and a positioning information,
   wherein the sensing information is based on information regarding the reflection of the transmitted sidelink positioning reference signal, and
   wherein the positioning information is based on ranging information regarding the transmitted positioning reference signal,
- Calculating a position of the user equipment based on the combined sensing and positioning information.

This allows the user equipment to advantageously perform a more efficient sidelink positioning and/or sensing procedure in a cellular network. Further, this advantageously improves the capabilities of the user equipment for determining its own location, for example relative position towards another device, or acquiring accurate positioning information. Combining is to be understood to the process of combining multiple information, data, or measurements to determine the accurate position of the user equipment or device. The positioning reference signal (PRS) range for example can be a range obtained from a Positioning Reference System, which could be a system like GPS (Global Positioning System), or any other technology used for positioning in a cellular network. The sensing range for example can be a range of a sensor or a set of sensors that can provide information about the object's position or its surroundings. When combining the sensing and the positioning information the data from both the PRS range and the sensing range are advantageously fused to obtain a more accurate estimate of the position of the user equipment. By leveraging the strengths and capabilities of both, sensing and positioning, the combining process advantageously improves the accuracy and reliability of the user equipment position estimation.

In the cellular network precise positioning is performed by using dedicated positioning or sensing reference signals. These signals span over the available bandwidth. Positioning can be defined as determining a location of the active user equipment, for example user equipment with sufficient and full receive and transmit capabilities. Sensing describes the process of detection and localization of passive targets, i.e., objects without receiving capabilities. A sidelink positioning reference signal is used for Device-to-Device (D2D) communication or Vehicular-to-Everything (V2X) communication scenarios in LTE or 5G networks. The sidelink positioning reference signal can be directly transmitted and received between devices, not involving the base station or Node B, to help determine the relative position of one device to another. This is particularly advantageous in a scenario, in which a direct communication between devices is necessary, such as autonomous vehicle communication or public safety applications.

In another embodiment of the inventive method the target comprises a reduced capability user equipment comprising a transceiver, wherein the transceiver comprises an operating frequency range for receiving and/or transmitting data for sensing and/or positioning.

This kind of user equipment contains reduced capabilities such as a smaller number of antennas and reduced receive and transmit bandwidth capabilities. The reduced capability user equipment or Redcap UE is a device with a limited complexity, where complexity means processing of data for higher modulation and coding at very high data rate. Further, such a UE only provides a limited transmission power, keeping the device or user equipment running on batteries for a sufficient operation time. Furthermore, this kind of UE only provides a limited bandwidth, which reduces complexity and/or transmission power. The reduced capability equipment can advantageously support the sensing performed by the user equipment.

Optionally the target can be for example a device. A device can be understood as a physical or virtual object that is configured for a specific purpose or function.

In another embodiment the transmitted sidelink positioning reference signal comprises a bandwidth, wherein the bandwidth of the sidelink positioning reference signal is larger than the operating frequency range of the reduced capability user equipment, and the method comprises the following further step:
- Receiving the positioning information based on a partial sidelink positioning reference signal from the reduced capability user equipment.

This allows a more efficient sensing procedure and advantageously increases the capabilities for supporting a more accurate and precise calculating of the user equipment's position in a cellular network.

In a further embodiment the user equipment comprises a sidelink location management function and a sidelink sensing management function, wherein the sidelink sensing management function is collocated to the sidelink location management function, wherein the combining is conducted by the sidelink sensing management function. The method comprises the further steps:
- Receiving the positioning information, in particular a relative position, of the target from the sidelink location management function,
- Providing the combined sensing information and positioning information to an application layer in a cellular network for further usage.

Here, the received positioning information is preferably requested by the user equipment. This allows a faster and more efficient performance of the sensing and positioning because the respective management functions are arranged at the user equipment. Further this has the advantage that the speed of calculating of the position of the user equipment can be significantly increased. This is further advantageous in case the user equipment is located at an autonomous vehicle, because of the faster providing of an accurate and precise positioning.

In another embodiment the combining step is conducted by the sidelink location management function, and the method comprises the further step:
- Receiving the sensing information from the sidelink sensing management function,
- Providing the combined sensing information and positioning information to an application layer in a cellular network for further usage.

Here, the received sensing information is preferably requested by the user equipment. This allows a faster and more efficient performance of the sensing and positioning because the respective management functions are arranged at the user equipment. Further this has the advantage that the speed of calculating of the position of the user equipment can be significantly increased. This is further advantageous in case the user equipment is located at an autonomous vehicle, because of the faster providing of an accurate and precise positioning.

In a further embodiment the method comprises the further following steps:
- Sending, at the sidelink sensing management function, a sensing information to the application layer, wherein the sensing information comprises a sensing report,
- Sending, at the sidelink location management function, a positioning information to the application layer, wherein the positioning information comprises a positioning report, and wherein the combining is conducted by a combining function in the application layer.

This has the advantage that the combined information is directly available at the application layer and can be utilized to enhance the user experience. Further, this allows for faster and more efficient data processing of sensing and/or positioning information, as the application layer can directly access the necessary information without going through additional layers. Furthermore, this advantageously reduces the risk of data breaches or unauthorized access.

According to a second aspect of the invention there is provided a user equipment for calculating a position in a cellular network. The user equipment comprises a transceiver configured for transmitting and/or receiving a sidelink position reference signal. The user equipment comprises a memory storing computer-executable instructions and a processor coupled with the transceiver and the memory. The processor is configured to execute the steps of the inventive method. Thus, the user equipment according to the invention brings the same advantages as have been described in detail with reference to the inventive method.

In a further embodiment the user equipment comprises a sidelink location management function and a sidelink sensing management function, wherein the sidelink location management function and/or the sidelink sensing management function are configured to combine a sensing information and a positioning information.

This allows the user equipment to advantageously improve its capabilities regarding a more efficient and more accurate sensing and/or positioning.

In a further embodiment the sidelink location management function and/or the sidelink sensing management function are configured to provide the combined sensing information and positioning information to an application layer in a cellular network for further usage. In another embodiment the sidelink sensing management function is collocated to the sidelink location management function. This allows a faster and more efficient performance of the sensing and positioning because the respective management functions are arranged at the user equipment. Further this has the advantage that the speed of calculating of the position of the user equipment can be significantly increased. This is further advantageous in case the user equipment is located at an autonomous vehicle, because of the faster providing of an accurate and precise positioning.

According to a third aspect, there is provided a computer program comprising instructions to cause the user equipment according to the second aspect, or its respective embodiments, to executive the steps of the method according to the first aspect, or its respective embodiments.

According to a fourth aspect, there is provided a computer-readable medium having stored thereon the computer program according to the third aspect.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: An exemplary embodiment of the inventive method;
- Fig. 2:: A further exemplary embodiment of the inventive method;
- Fig. 3:: A further exemplary embodiment of the inventive method; and
- Fig. 4:: A further exemplary embodiment of the inventive method.

It is the core of the invention to combine the received reflected positioning reference signal (PRS) signal by the target and the received partial reception of the PRS signal within the receiver bandwidth of the RedCap. This means that in a situation in which the sensing bandwidth exceeds the RedCap bandwidth the reflected PRS signal comprising the full sensing bandwidth can be used either in a monostatic or bi-static way by for example the user equipment or alternatively a node, for example a gNode B. Thus, the position of the user equipment can be calculated by a combining or fusing of the PRS RedCap ranging based on the partial reception of the PRS signal and the sensing ranging based on the reflected PRS from target. The reflected PRS signal is no active PRS signal reply by the target or object such as a reduced capability equipment for example.

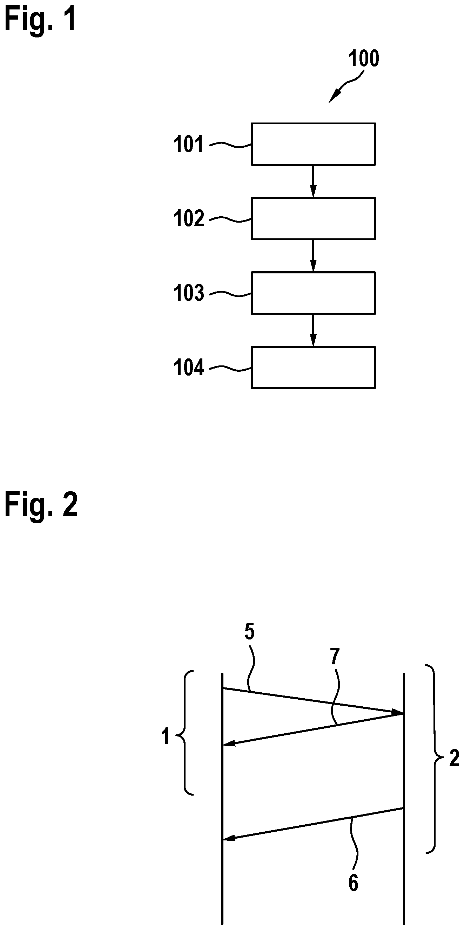

Fig. 1 shows an embodiment of the inventive method 100 for a user equipment 10. Fig. 1 illustrates according to one embodiment of the invention a method 100 for calculating a position, at a user equipment 10, comprising the following steps: In step 101 a sidelink positioning reference signal 5 is transmitted to a target 20. This starts the sensing and positioning procedure at a user equipment 10. According to step 102 a reflection 7 of the transmitted sidelink positioning reference signal 5 is received from the target 20. In step 103 a sensing information and a positioning information is combined, wherein the sensing information is based on information regarding the reflection of the transmitted sidelink positioning reference signal 5, and wherein the positioning information is based on ranging information regarding the transmitted positioning reference signal 5. Then, in step 104 a position of the user equipment 10 is calculated based on the combined sensing and positioning information.

Fig. 2 illustrates a further embodiment of the inventive method 100. Fig. 2 depicts a schematic flow chart regarding the process of sensing 1 and positioning 2. Fig. 2 shows the different signals 5,6,7, which are transmitted to a reduced capability user equipment 20 and received by the user equipment 10 during the performance of sensing 1 and positioning 2. In Fig. 2 a positioning reference signal 5 is shown, wherein the signal 5 comprises a full sensing bandwidth. Further a reflected signal 7 of the transmitted signal 5 is depicted. The signal 7 is reflected by a target 20, which comprises the full sensing bandwidth. The signal 7 is not to be understood as an active reply from the target 20, it is simply a (passive) reflection 7 of the transmitted signal 5. The reflection signal 7 will be received very fast at the user equipment 10, as the reflection 7 does not require any processing but just depends on the distance. Further, a partial positioning reference signal 6 comprising the bandwidth of the operating frequency range of the reduced capability user equipment, which is smaller than the full sensing bandwidth.

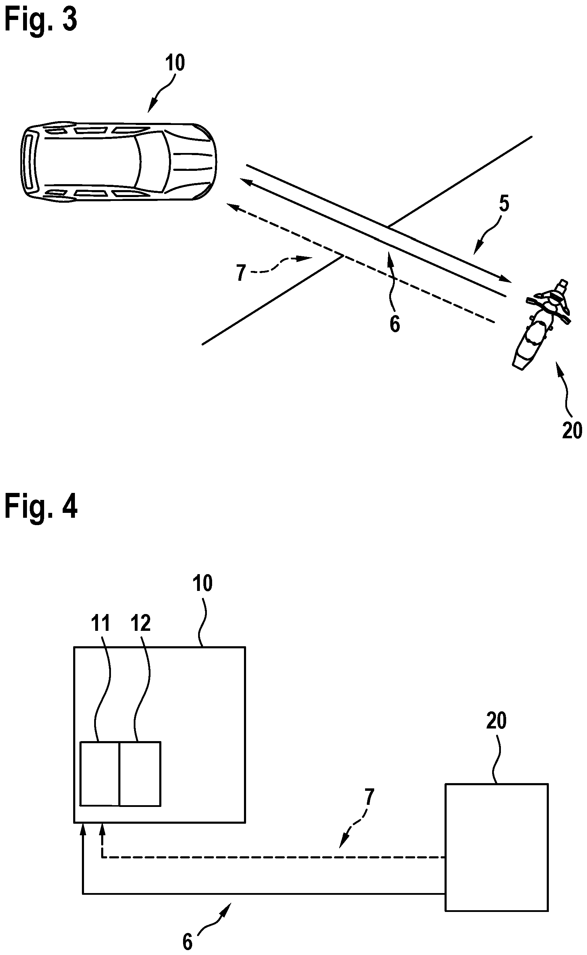

Fig. 3 illustrates a further embodiment of the inventive method 100. Fig. 3 depicts the inventive method 100 performed by a user equipment 10 and a reduced capability equipment 20 in a cellular network. The user equipment 10 can be for example a device 10 of a vehicle. The user equipment transmits a sidelink positioning reference signal 5 to a target 20, which in this embodiment for example can be a reduced capability user equipment 20. In this situation the sensing bandwidth of the transmitted signal 5 exceeds the bandwidth of the operating frequency range of the reduced capability equipment 20. Thus, the reduced capability user equipment 20 transmits a response 6, wherein the response 6 comprises sensing data based on the partial reception of the sidelink positioning refence signal 6. The partial reception is caused by the smaller bandwidth of the operating frequency range of the reduced capability user equipment 20. However, it is also shown in Fig. 3 that the user equipment 10 receives the reflected sidelink positioning reference signal 7 comprising a full sensing bandwidth.

Fig. 4 shows an exemplary further embodiment of the inventive method 100. Fig. 4 illustrates a user equipment 10 and a target 20. In this figure the user equipment 10 receives sensing data based on the partial reception of the sidelink positioning refence signal 6 and receives the reflected sidelink positioning reference signal 7. In this embodiment the user equipment 10 comprises a sidelink location management function 11 (SLMF) and a sidelink sensing management function 12 (SSeMF). The sidelink sensing management function 12 is collocated to the sidelink location management function 11. Alternatively, the sidelink sensing management function 12 can also be arranged in a different way than depicted in Fig. 4. For example, the sidelink sensing management function 12 can be arranged with another device or function of the cellular network.

In the embodiment depicted in Fig. 4, the sidelink sensing management function 12 performs a sensing procedure or a sensing 1. This is performed by transmitting a positioning reference signal 5 (PRS) via a sidelink channel. The sidelink sensing management function 12 than requests the relative position of the sensed target 20 from the sidelink location management function 11. The sidelink location management function 11 provides the relative position of the target 20. The sidelink sensing management function 12 combines the relative position information with the sensing data and provides the combined information to an application layer (not shown) for further usage of the information.

In a further embodiment not shown in Fig. 4, the combining step alternatively can be performed in the sidelink location management function 11. In this further embodiment the user equipment 10 comprises a sidelink location management function 11 (SLMF) and a sidelink sensing management function 12 (SSeMF). The sidelink sensing management function 12 is collocated to the sidelink location management function 11. In this further embodiment the sidelink sensing management function 12 performs the sensing 1. The sidelink location management function 11 requests the sensing data from the sidelink sensing management function 12. The sidelink sensing management function 12 provides the sensing data. The sidelink location management function 11 combines the relative position information with the sensing data and provides the combined information to the application layer (not shown).

In another alternative embodiment also not depicted in Fig. 4, the combining step can be performed at the level of the application layer. In this embodiment the sidelink sensing management function 12 sends a sensing report comprising sensing data to the application layer and the sidelink location management function 11 sends a positioning report comprising the relative position information to the application layer. A function or instance at the application layer then combines the sensing and positioning information for further usage.

The above explanation of the embodiments describes the present invention in the context of examples. Of course, individual features of the embodiments can be freely combined with each other, if this is technically reasonable, without leaving the scope of the present invention.

## Claims

1. A method (100) for calculating a position of a user equipment (10), comprising the following steps performed by the user equipment (10):
- Transmitting (101) a sidelink positioning reference signal (5) to a target (20),
- Receiving (102) a reflection of the transmitted sidelink positioning reference signal (7) from the target (20),
- Combining (103) a sensing information and a positioning information, wherein the sensing information is based on information regarding the reflection of the transmitted sidelink positioning reference signal (7), and
wherein the positioning information is based on ranging information regarding the transmitted positioning reference signal (5),
- Calculating (104) a position of the user equipment (10) based on the combined sensing and positioning information.

2. The method (100) according to claim 1, **characterized in that**, the target (20) comprises a reduced capability user equipment, comprising a transceiver, wherein the transceiver comprises an operating frequency range for receiving and/or transmitting data for sensing and/or positioning.

3. The method (100) according to claim 2, **characterized in that**, the transmitted sidelink positioning reference signal (5) comprises a bandwidth, wherein the bandwidth of the sidelink positioning reference signal (5) is larger than the operating frequency range of the reduced capability user equipment (20), and the method (100) comprise the following further step:
- Receiving the positioning information based on a partial sidelink positioning reference signal (6) from the reduced capability user equipment (20).

4. The method (100) according to any one of the preceding claims, **characterized in that**, the user equipment (10) comprises a sidelink location management function (11) and a sidelink sensing management function (12), wherein the sidelink sensing management function (12) is collocated to the sidelink location management function (11), wherein the combining (103) is conducted by the sidelink sensing management function (12) and the method (100) comprises the further steps:
- Receiving the positioning information, in particular a relative position, of the target (20) from the sidelink location management function (11),
- Providing the combined sensing information and positioning information to an application layer in a cellular network for further usage.

5. The method (100) according to claim 4, **characterized in that**, the combining (103) is conducted by the sidelink location management function (11), and the method (100) comprises the further step:
- Receiving the sensing information from the sidelink sensing management function (12),
- Providing the combined sensing information and positioning information to an application layer in a cellular network for further usage.

6. The method (100) according to claim 4 or 5, **characterized in that** the method (100) comprises the further following steps:
- Sending, at the sidelink sensing management function (12), a sensing information to the application layer, wherein the sensing information comprises a sensing report,
- Sending, at the sidelink location management function (11), a positioning information to the application layer, wherein the positioning information comprises a positioning report, and wherein the combining is conducted by a combining function in the application layer.

7. User equipment (10) comprising:
a transceiver configured for transmitting and/or receiving a sidelink position reference signal (5, 6),
a memory storing computer-executable instructions,
a processor coupled with the transceiver and the memory, wherein the processor is configured to execute the steps of the method (100) according to any one of the preceding claims.

8. User equipment (10) according to claim 7, **characterized in that** the user equipment (10) further comprises a sidelink location management function (11) and a sidelink sensing management function (12), wherein the sidelink location management function (11) and/or the sidelink sensing management function (12) are configured to combine a sensing information and a positioning information.

9. User equipment (10) according to claim 8, **characterized in that** the sidelink location management function (11) and/or the sidelink sensing management function (12) are configured to provide the combined sensing information and positioning information to an application layer in a cellular network for further usage.

10. User equipment (10) according to claim 8 or 9, **characterized in that** the sidelink sensing management function (12) is collocated to the sidelink location management function (11).

11. A computer program comprising instructions to cause the user equipment (10) according to one of claims 7 to 10 to executive the steps of the method (100) according to one of claims 1 to 6.

12. A computer-readable medium having stored thereon the computer program of claim 11.
